# EUROPÄISCHE PATENTSCHRIFT

(11) **EP 2 526 894 B1**
(45) Veröffentlichungstag und Bekanntmachung des Hinweises auf die Patenterteilung: **12.02.2014**
(21) Anmeldenummer: 11167289.5
(22) Anmeldetag: 24.05.2011
(51) Int. Cl.: A61C 13/15

(54) **Lichthärtgerät**
Light hardening device
Appareil de durcissement à la lumière

(43) Veröffentlichungstag der Anmeldung: 28.11.2012
(73) Patentinhaber: Ivoclar Vivadent AG, 9494 Schaan (LI)
(72) Erfinder: Jaeger, Sonja, 9493 Mauren (LI); Murr, Wolfram, 7000 Chur (CH)
(74) Vertreter: Splanemann

(56) Entgegenhaltungen:
- US-A- 5 912 470
- US-B1- 6 278 069

## Beschreibung

Die Erfindung betrifft ein Lichthärtgerät für Dentalzwecke, insbesondere ein handgeführtes Lichthärtgerät, gemäß dem Oberbegriff von Anspruch 1.

Derartige Lichthärtgeräte dienen dazu, polymerisierbare Dentalrestaurationen zu polymerisieren. Hierzu weist das Gerät eine Lichtquelle auf, deren Lichtabgabe auf das auszuhärtende Dentalrestaurationsmaterial abgestimmt ist. Nachdem Dentalrestaurationen an den unterschiedlichsten Stellen am Oberkiefer oder Unterkiefer im Mund des Patienten angebracht werden müssen, ist eine leichte Handhabbarkeit und die Applizierung des Lichthärtgeräts in unterschiedlichen Positionen relativ zum Mund des Patienten unabdingbar.

Um eine ergonomische Handhabung zu gewährleisten, sind derartige Lichthärtgeräte entweder im Wesentlichen pistolenförmig oder im Wesentlichen stabförmig. Abgesehen von der Lichtquelle muss das Gehäuse des Lichthärtgeräts Energiequellen wie Akkumulatoren aufnehmen, und die Steuerelektronik für die Realisierung des Polymerisationszyklusses.

Der grundsätzliche Aufbau eines derartigen Lichthärtgeräts lässt sich der DE 10 2006 035 658 entnehmen. Das dort beschriebene Lichthärtgerät weist an seiner Unterseite einen Betätigungsschalter mit einer Tastenfunktion auf, und an seiner Oberseite, die dem Bediener zugewandt ist, eine Anzeigevorrichtung.

Ein weiterer Aufbau eines Lichthärtgeräts ist aus der Patentschrift US5912470 bekannt. Das dort beschriebene Lichthärtgerät weist ebenfalls an seiner Unterseite einen Betätigungsschalter auf, eine weitere Bedieneinheit und eine Anzeigevorrichtung sind auf der dem Betätigungsschalter gegenüberliegenden Griffseite angebracht.

Derartige Anzeigevorrichtungen sind wichtig, um dem Bediener rasch erfassbare und knappe Informationen über den Belichtungszustand zu geben, aber auch beispielsweise, um den Bediener darüber zu informieren, ob die zur Verfügung stehende Restkapazität des Energiespeichers für den gewünschten Polymerisationszyklus ausreicht.

Während sich der Auslöseknopf der genannten Offenlegungsschrift praktisch nur mit dem Zeigefinger des Bedieners - oder gegebenenfalls mit dessen Mittelfinger - bedienen lässt, wird heutzutage gerade von jüngeren Zahnärzten eine Daumenbedienbarkeit des Auslöseknopfes erwünscht. Die betreffende Bedientaste muss dann zweckmäßig weiter an der Oberseite des dentalen Lichthärtgeräts angebracht werden, wie es bei stabförmigen Lichthärtgeräten ohnehin üblich ist.

Während bei einem Betätigungsknauf, der nach der Art eines Abzugs einer Pistole an der Unterseite des Lichthärtgeräts befestigt ist, dieser aufgrund der natürlichen Handhaltung gleichsam automatisch betätigt wird, ist dies bei einem Betätigungsknauf auf der Oberseite nur dann der Fall, wenn der Bediener gezielt mit seinem Finger den Betätigungsknauf ansteuert. In diesem Zusammenhang ist zu berücksichtigen, dass der Zahnarzt seine Aufmerksamkeit schwerpunktmäßig nicht auf das Gerät, sondern den Mund des Patienten und das dort befindliche Dentalrestaurat richtet und das Lichtaustrittsende des Lichthärtgeräts präzise an die richtige Stelle positionieren und dauerhaft - zumindest während der Lichthärtung - halten muss.

Um dennoch eine zuverlässige Auslösung zu ermöglichen, ist es vorgeschlagen worden, die Größe des Auslöseknopfes zu vergrößern.

Überraschend zeigte es sich jedoch, dass die Bedienbarkeit bei einem größeren Auslöseknopf noch verschlechtert ist, so dass die Hersteller von Lichthärtgeräten praktisch ausschließlich einen Auslöseknopf verwenden, dessen Größe die Größe einer menschlichen Fingerkuppe nicht übersteigt, also beispielsweise einen Durchmesser von weniger als 8 mm hat.

Demgegenüber liegt der Erfindung die Aufgabe zugrunde, ein sicher betätigbares Lichthärtgerät gemäß dem Oberbegriff von Anspruch 1 zu schaffen, das dennoch die Möglichkeit bietet, Zusatzinformationen anzuzeigen.

Diese Aufgabe wird erfindungsgemäß durch Anspruch 1 gelöst. Vorteilhafte Weiterbildungen ergeben sich aus den Unteransprüchen.

Erfindungsgemäß ist es besonders günstig, dass für die Betriebssteuerung des Lichthärtgeräts ein recht großes Betätigungsglied eingesetzt werden kann, das auf zwei elektrisch zueinander parallel geschaltete Steuerelemente wirkt. Die Steuerelemente sind voneinander beabstandet. Mindestens ein Teil des Betätigungsglieds erstreckt sich - in der Projektion von oben betrachtet - zwischen den Steuerelementen, woraus sich der Abstand zwischen den Steuerelementen ergibt.

Erfindungsgemäß ist es besonders günstig, dass mit dem Betätigungsglied eine recht große Betätigungsfläche zur Verfügung steht. Diese kann sich parallel zur Gehäuseoberfläche erstrecken, bevorzugt im Wesentlichen parallel oder schräg zur Längsachse des Lichthärtgeräts.

Auch bei "Blindbetätigung" verfehlt der Bediener dann die Betätigungsfläche des Betätigungsglieds nicht.

Dennoch ist erfindungsgemäß die Betätigung verkantungssicher. Wenn entgegen der Erfindung lediglich ein Steuerelement für die Auslösung des elektrischen Schaltvorgangs eingesetzt wird, das beispielsweise zentral unter dem Betätigungsglied angeordnet ist, würde dies dazu führen, dass Druck auf den Rand des Betätigungsglieds eine Verkantung des zughörigen Schaltelements wie eines Stößels des Steuerelements entsteht. Dies wird erfindungsgemäß durch die Realisierung von zwei Steuerelementen vermieden; unabhängig davon, an welcher Stelle das Betätigungsglied niedergedrückt wird, löst eines der Steuerelemente - oder gegebenenfalls auch beide - aus und stellt die für die Betriebssteuerung des Lichthärtgeräts erforderliche Steuerungsfunktion bereit.

In erfindungsgemäß besonders günstiger Weise lässt sich mit Steuerelementen mit einer recht geringen Betätigungskraft arbeiten. Die Betätigungskraft muss mindestens so groß sein wie das Gewicht des Betätigungsglieds und der zugehörigen Schaltelemente, und zusätzlich auch eine Sicherheitsmarge umfassen. Wenn das Gesamtgewicht dieser Teile beispielsweise 20 Gramm beträgt, reicht eine Betätigungskraft von 1 Newton pro Steuerelement ohne Weiteres aus, denn die gesamte Rückstellkraft beträgt dann 2 Newton, also etwa das Zehnfache des genannten Gewichts.

In vorteilhafter Ausgestaltung der Erfindung ist es vorgesehen, dass das großflächige Betätigungsglied Führungselemente trägt, die die Bewegung des Betätigungsglieds in Betätigungsrichtung erlauben, jedoch eine Bewegung quer zu dieser verhindern. Derartige Führungselemente können beispielsweise als von dem Betätigungsglied abragende Stifte ausgebildet sein, die in Durchtrittsöffnungen an einem gehäusefesten Teil geführt sind. Das gehäusefeste Teil kann beispielsweise eine gedruckte Schaltung sein, die auch die Steuerelemente lagert.

Die Begrenzung des Betätigungswegs des Betätigungsglieds kann bei Bedarf entweder durch die Führungselemente oder durch das Gehäuse oder ein anderes gehäusefestes Teil gebildet sein, das die erwünschte Führung des Betätigungsglieds zur Verfügung stellt.

Die Führungselemente verhindern nicht, dass das Betätigungsglied eine leichte Kippbewegung erfahren kann, wie sie durch das einseitige Niederdrücken des Betätigungsglieds erfolgt. Der insofern erlaubte und durch das Übermaß der Durchtrittsöffnungen gegenüber den Stiften bereitgestellte Kippwinkel kann beispielsweise zehn Grad betragen, während der durch das einseitige Niederdrücken des Betätigungsglieds erzeugte und durch das Steuerelement begrenzte Kippwinkel etwas weniger beträgt, beispielsweise acht Grad.

In vorteilhafter Ausgestaltung ist es vorgesehen, dass das Betätigungsglied zugleich als Teil einer Anzeigevorrichtung augebildet ist. Hierzu ist es wenigstens teilweise transparent oder durchscheinend ausgebildet. Bevorzugt ist dies mindestens teilweise in dem Bereich zwischen den Steuerelementen vorgesehen, wiederum in der Projektion in der Ansicht von oben auf das Betätigungsglied betrachtet gesehen.

Um die erwünschte Anzeige bereitzustellen, weist das Betätigungsglied bevorzugt Licht-durchtrittsöffnungen auf, und die gedruckte Schaltung trägt lichtemittierende Elemente, insbesondere LED-Chips, die mit den Durchtrittsöffnungen fluchten. Beispielsweise können drei oder vier LED-Chips und eine entsprechende Anzahl von Lichtdurchtrittsöffnungen vorgesehen sein, die sich wiederum zwischen den Steuerelementen erstrecken und je deutlich voneinander beabstandet sind.

Um den Lichtaustritt der lichtemittierenden Elemente zu kanalisieren und eine optische Entkopplung vorzunehmen, weist das Betätigungsglied im Bereich der Lichtdurchtrittsöffnungen intransparentes oder opakes Material auf. Damit fällt das Licht jedes LED-Chips in die zugehörige Lichtdurchtrittsöffnung des Betätigungsglieds, tritt aber nicht in benachbarte Lichtdurchtrittsöffnungen ein.

Die erfindungsgemäß bevorzugte Abdeckung weist an den Stellen, die den Lichtdurchtrittsöffnungen entsprechen, Beschriftungen oder Symbole auf, die den Betriebszustand des Lichthärtgeräts oder aber beispielsweise die angewählten Belichtungszeiten signalisieren. Für die Betriebssteuerung des Lichthärtgeräts kann der Bediener beispielsweise das Betätigungsglied mehrfach niederdrücken und so die Belichtungszeit einstellen. Hierzu wird durch die Steuervorrichtung des Lichthärtgeräts das zugehörige lichtemittierende Element eingeschaltet, so dass die betreffende Belichtungszeit von unten beleuchtet wird und für den Bediener sichtbar ist, während die anderen Belichtungszeiten unbeleuchtet sind und daher unsichtbar oder zumindest nahezu unsichtbar sind.

Bevorzugt ist es in diesem Zusammenhang vorgesehen, durch mehrfache Betätigung des Betätigungsglieds die jeweilige Belichtungszeit anzuwählen, wobei die Belichtungszeiten praktisch durch die Betätigung zyklisch durchlaufen werden. Es ist auch möglich, durch eine besondere Betätigung wie ein Doppelklick, also das zweifache Niederdrücken des Betätigungsglied innerhalb einer kurzen Zeit, eine Einschaltung des Lichthärtgeräts vorzunehmen, oder eine beliebige andere Steuerfunktion auszulösen, die dem entsprechenden Betriebszustand entspricht, der durch die Steuervorrichtung des Lichthärtgeräts bereitgestellt wird.

Bevorzugt weist das Betätigungsglied, abgesehen von dem intransparenten Material, auch eine Abdeckung aus transparentem oder durchscheinendem Material auf. Diese Abdeckung erstreckt sich über das intransparente Material und bildet zugleich die Betätigungsfläche des Betätigungsglieds. Sie ist in ihrer Form an die Außenkontur des Lichthärtgeräts an dieser Stelle angepasst und fluchtet mit dieser. Bevorzugt ist jedoch ein geringes Vorsprungmaß gegenüber einer exakt fluchtenden Ausrichtung vorgesehen, das beispielsweise 0,5 oder 1 mm beträgt, und um welches die Abdeckung gegenüber dem Gehäuse vorspringt.

Für die Betätigung des Betätigungsglieds fühlt der Bediener dann auch bei Blindbetätigung dann umgehend, dass er das Betätigungsglied an der richtigen Stelle niederdrückt. Der Betätigungshub beträgt bevorzugt ebenfalls 1 mm, so dass in niedergedrücktem Zustand sich die Betätigungsfläche fluchtend mit der Oberfläche des Gehäuses oder etwas unterhalb dieser Ebene erstreckt.

Besonders günstig ist es auch, dass mit der erfindungsgemäßen Gesamteinheit aus Betätigungsknopf und Anzeigevorrichtung das Gehäuse des Lichthärtgeräts lediglich eine Durchbrechung aufweisen muss und so leichter sterilisierbar ist. Bei Bedarf kann auch zwischen dem Betätigungsglied und der diese aufnehmenden Durchtrittsöffnung in dem Gehäuse des Lichthärtgeräts eine Dichtung realisiert sein, die beispielsweise aus einem Dichtungsbalg bestehen kann, der aus Elastomer besteht und umlaufend dort abdichtet, ohne die Hubbewegung des Betätigungsglieds zu behindern. Bei dieser Ausgestaltung ist das erfindungsgemäße Lichthärtgerät dann dicht und lässt sich beispielsweise auch in einem Bad aus Sterilisationsflüssigkeit sterilisieren.

Besonders günstig ist es, wenn das Betätigungsglied sich nach Art eines Balkens oder einer Brücke zwischen den Steuerelementen erstreckt und an Auflagern auf Schaltelementen, insbesondere den Stößeln, der Steuerelemente, abgestützt ist. Die Stößel bilden dann gleichsam die Brückenpfosten, und es ist eine sichere und stabile Lagerung gewährleistet. Bevorzugt erstreckt sich eine Anzeigevorrichtung des Lichthärtgeräts zwischen den Steuerelementen, wobei LEDs-Chips der Anzeigevorrichtung gehäusefest gelagert sind. Die Lagerung kann entweder bevorzugt auf der gedruckten Schaltung erfolgen, aber es können auch diskrete LEDs eingesetzt werden. Durch die Lichtdurchtrittsöffnung des Betätigungsglieds verlassen die von den LEDs ausgesandten Lichtsignale das Lichthärtgerät, wobei sie auch eine transparente Abdeckung anschließend an die Lichtdurchtrittsöffnung durchtreten.

Die LEDs oder LED-Chips sind bevorzugt im Wesentlichen im gleichen Raster voneinander beabstandet und erstrecken sich zwischen den Tastern oder Schaltern, die die Steuerelemente bilden. Oberhalb jedes LED-Chips ist eine Durchtrittsöffnung in dem Betätigungsglied ausgebildet, wobei die Durchtrittsöffnungen bevorzugt eine solche Höhenlage aufweisen, dass sich je ein LED-Chip in eine Durchtrittsöffnung hinein erstreckt, jedoch bevorzugt lediglich teilweise. Die Durchtrittsöffnungen weisen gegenüber den LED-Chips ein Übermaß auf, so dass auch bei Kippbewegung des Betätigungsglieds keine Anlage zwischen dem betreffenden LED-Chip und dem Rand der Durchtrittsöffnung entsteht.

Bevorzugt weist das Betätigungsglied ein Längen- / Breitenverhältnis zwischen 1,5 zu 1 und 10 zu 1 auf, und die Steuerelemente sind an den Enden der Längsseite des Betätigungsglieds angebracht. Sowohl die LED-Chips als auch die Steuerelemente liegen bevorzugt auf der gedruckten Schaltung auf. Sie können als SMD-Bauteile ausgebildet sein, oder mit Anschlüssen für durchkontaktierte Lötaugen realisiert sein.

Bevorzugt weist jedes Steuerelement eine Druckfeder auf, deren Federkraft in eingebautem Zustand der Betätigungskraft des Steuerelements entspricht. Diese Federkraft reicht jedenfalls aus, das Betätigungsglied von innen gegen das Gehäuse zu drücken.

Durch die elektrische Parallelschaltung der Steuerelemente lässt sich eine logische Oder-Funktion bei der Betätigung der Steuerelemente realisieren. Wenn eines der Steuerelemente betätigt wird, wird die entsprechende Schaltfunktion ausgelöst.

Beispielsweise kann dann der Betriebszustand des Lichthärtgeräts geändert werden. In einem Auswahlmodus vor der Einschaltung des Lichthärtgeräts lässt sich die erwünschte Belichtungszeit ändern, beispielsweise zwischen 10, 15, 20 und 30 Sekunden, und eine einmalige Betätigung des Betätigungsglieds schaltet die Belichtungszeit auf die nächstfolgende Belichtungszeit um, also von 10 auf 15, von 15 auf 20, von 20 auf 30 und dann wieder auf 10, so dass die erwünschten Belichtungszeiten durch zyklisches Durchlaufen ausgewählt werden. Bevorzugt wird praktisch durch Betätigung des Betätigungsglieds ein der Belichtungszeit entsprechender LED-Chip eingeschaltet und alle anderen ausgeschaltet.

Eine Fehlerfunktion kann beispielsweise durch ein Blinken der entsprechenden lichtemittierenden Elemente signalisiert werden, etwa, wenn der Ladezustand des Lichthärtgeräts für die erwünschte Belichtungszeit nicht ausreichend ist.

In vorteilhafter Ausgestaltung ist es vorgesehen, dass die Abdeckung als gesondertes Bauteil ausgebildet ist, das insbesondere passgenau mit dem Betätigungsglied im Übrigen zusammenwirkt. Hierdurch lässt sich eine gut geschützte Ausgestaltung für die erwünschte Steuerungsfunktion bereitsstellen.

Hinsichtlich der Handhabung ist es günstig, dass das Steuerelement auch bei außermittigem Druck eine Steuerfunktion auslöst, insbesondere auch bei Betätigung im Randbereich des Betätigungsglieds. Wenn das Betätigungsglied an seinem Rand, insbesondere einem der Steuerelemente benachbart, niedergedrückt wird, löst dieses Steuerelement aus, während das andere Steuerelement nicht auslöst. Die Steuerfunktion wird hiermit gestartet, und zwar unabhängig davon, welches der Steuerelemente niedergedrückt wird.

In vorteilhafter Ausgestaltung ist es vorgesehen, dass das Lichthärtgerät wenigstens zwei voneinander beabstandete Steuerelemente aufweist, die elektrisch parallel zueinander geschaltet sind, und mindestens eines der Steuerelemente durch Betätigung des Betätigungsglieds betätigbar ist.

In vorteilhafter Ausgestaltung ist es vorgesehen, dass die Steuerelemente mit dem Betätigungsglied betätigbare, federbelastete Schaltelemente, insbesondere je eine Wippe oder einen Stößel, aufweisen.

In vorteilhafter Ausgestaltung ist es vorgesehen, dass sich zumindest ein Teil des Betätigungsgliedes zwischen den Steuerelementen erstreckt und insbesondere zumindest ein Teil des Betätigungsgliedes die Aussenkontur der Steuerelemente überragt.

In vorteilhafter Ausgestaltung ist es vorgesehen, dass das Betätigungsglied sich nach der Art eines Balkens oder einer Brücke über die Steuerelemente erstreckt und an diesen abgestützt ist.

In vorteilhafter Ausgestaltung ist es vorgesehen, dass das Betätigungsglied in Betätigungsrichtung der Steuerelemente gegenüber einer im Gehäuse angeordneten gedruckten Schaltung beweglich gelagert ist, wobei der Bewegungsweg des Betätigungsglieds von gehäusefesten Anschlägen und/oder von der gedruckten Schaltung und/oder von Anschlägen der Steuerelemente begrenzt ist.

In vorteilhafter Ausgestaltung ist es vorgesehen, dass der beweglichen Lagerung des Betätigungsgliedes wenigstens Führungselemente dienen, die eine Bewegung des Betätigungsglieds in eine Richtung quer zur Betätigungsrichtung der Steuerelemente verhindern, eine Kippbewegung des Betätigungsglieds jedoch ermöglichen, insbesondere dass zwei vom Betätigungsglied abragende Stifte in entsprechende Durchtrittsöffnungen in der gedruckten Schaltung ragen.

In vorteilhafter Ausgestaltung ist es vorgesehen, dass auf der gedruckten Schaltung wenigstens ein Licht emittierendes Element und die Steuerelemente angebracht sind und auf dieser aufliegen, insbesondere mehrere Licht emittierende Elemente, und das Betätigungsglied wenigstens eine Licht-Durchtrittsöffnung aufweist, insbesondere mehrere, deren Mittellängsachse insbesondere mit der Lichtemssionsachse des lichtemittierendes Elementes fluchtet.

In vorteilhafter Ausgestaltung ist es vorgesehen, dass die Licht-Durchtrittsöffnungen zur optischen Entkopplung der lichtemittierenden Elemente voneinander eine solche Höhenlage aufweisen, dass sich je ein lichtemittierendes Element in eine Licht-Durchtrittsöffnung hinein erstreckt.

In vorteilhafter Ausgestaltung ist es vorgesehen, dass das Betätigungsglied auch bei dem Auslösen lediglich eines Steuerelementes durch Druck auf eine Seite des Betätigungsglieds einen seitlichen Abstand gegenüber den Licht emittierenden Elementen belässt.

In vorteilhafter Ausgestaltung ist es vorgesehen, dass das Betätigungsglied wenigstens teilweise aus einem intransparenten bzw. opaken Material besteht und auf der den lichtemittierenden Elementen gegenüberliegenden Seite der Durchtrittsöffnungen eine Abdeckung aufweist, auf der insbesondere Beschriftungen oder Symbole angebracht sind und besonders bevorzugt Belichtungszeiten in Form von Zahlen erkennbar sind.

In vorteilhafter Ausgestaltung ist es vorgesehen, dass die Abdeckung vor den Durchtrittsöffnungen transparent ist, an welchen Stellen die Beschriftungen oder Symbole angebracht sind, und insbesondere im Übrigen intransparent bzw. opak ist.

In vorteilhafter Ausgestaltung ist es vorgesehen, dass sich die Abdeckung in vertikaler Richtung an der Innenseite des Gehäuses abstützt und die vertikale Beweglichkeit des Betätigungsglieds begrenzt.

In vorteilhafter Ausgestaltung ist es vorgesehen, dass beim Betätigen des Betätigungsgliedes die lichtemittierenden Elemente nacheinander aufleuchten und dass insbesondere das Aufleuchten eines lichtemittierenden Elementes einen bestimmten Betriebszustand und/oder eine Belichtungszeit symbolisiert.

In vorteilhafter Ausgestaltung ist es vorgesehen, dass bei Betätigung des Schalters oder Tasters als optische Bestätigung der Betriebszustand mindestens eines lichtemittierenden Elements geändert wird, insbesondere ein lichtemittierendes Element ausgeschaltet und ein benachbartes eingeschaltet wird.

In vorteilhafter Ausgestaltung ist es vorgesehen, dass das Steuerelement von einem elektrischen Schalter oder einem elektrischen Taster gebildet ist und/oder die lichtemittierenden Elemente von Leuchtdioden (LED), insbesondere LED-Chips, gebildet sind.

In vorteilhafter Ausgestaltung ist es vorgesehen, dass die Abdeckung an einem elastischen Material, insbesondere Silikon besteht.

Weitere Vorteile, Einzelheiten und Merkmale ergeben sich aus der nachfolgenden Beschreibung mehrerer Ausführungsbeispiele anhand der Zeichnungen.

Es zeigen:
- Fig. 1: eine schematische Ansicht eines erfindungsgemäßen Lichthärtgeräts in einer Ausführungsform;
- Fig. 2: eine schematische Ansicht des Betätigungsglieds und des Steuerelements sowie der gedruckten Schaltung für das Lichthärtgerät gemäß Fig. 1 in erfindungsgemäßer Ausgestaltung;
- Fig. 3: eine weitere perspektivische Darstellung entsprechend der Darstellung gemäß Fig. 2, wobei zusätzlich die Abdeckung des Betätigungsglieds ersichtlich ist;
- Fig. 4: eine weitere Ausführungsform eines erfindungsgemäßen Betätigungsglieds und weiterer Teile des erfindungsgemäßen Lichthärtgeräts in einer weiteren Ausführungsform;
- Fig. 5: ein Schnitt durch das Betätigungsglied und weitere Teile des erfindungsgemäßen Lichthärtgeräts in einer dritten Ausführungsform, entsprechend der Ausführungsform gemäß Fig. 2;
- Fig. 6: eine modifizierte Ausgestaltung eines erfindungsgemäßen Lichthärtgeräts, unter Darstellung eines Teils eines Betätigungsglieds in einem Querschnitt; und
- Fig. 7: ein Schnitt entsprechend der Darstellung gemäß Fig. 6, jedoch an einer anderen Stelle, wobei das Steuerelement geschnitten dargestellt ist.

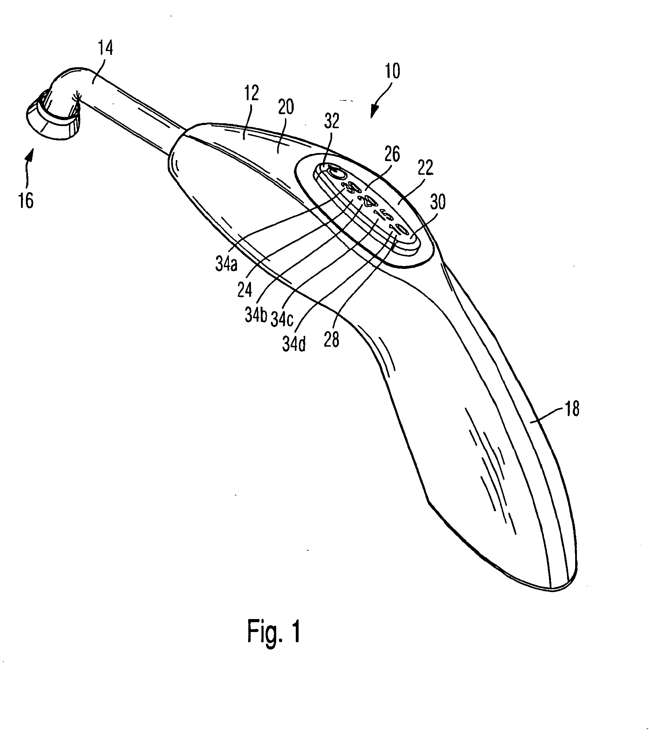

Das in Fig. 1 dargestellte Lichthärtgerät 10 weist ein Gehäuse 12 auf, an dessen vorderem Ende ein Lichtleitstab 14 angebracht ist, dessen Ende in an sich bekannter Weise für die Lichtabgabe bei 16 abgekröpft ist.

Das Gehäuse 12 des Lichthärtgeräts 10 ist im Wesentlichen pistolenförmig ausgebildet und weist insofern einen Handgriff 18 und einen Schaft 20 auf, die zueinander schräg abgewinkelt sind, beispielsweise in einem Schrägstellungswinkel von 35 Grad.

Auf der Oberseite des Lichthärtgeräts 10, im Bereich des Schafts 20, jedoch in dessen rückwärtigem Bereich, also dem Handgriff 18 benachbart, ist eine Aufnahmefläche 22 ausgebildet, die ein erfindungsgemäßes Betätigungsglied 26 aufnimmt. In dem dargestellten Ausführungsbeispiel ist die Aufnahmefläche 22 durch ein leichtes Absetzen gegenüber dem Gehäuse 12 im Übrigen realisiert. Es versteht sich, dass anstelle dessen auch eine übergangslose Realisierung der Aufnahmefläche 22 möglich ist, also eine Realisierung, bei der die Aufnahmefläche 22 gegenüber dem Gehäuse 12 im Übrigen nicht abgesetzt ist.

Das Betätigungsglied 26 ist länglich ausgebildet und in dem dargestellten Ausführungsbeispiel hat es die Form der Umrisse etwa eines Tannenzapfens. Das breitere Ende ist dem Handgriff 18 benachbart, und das schmalere Ende dem Lichtleitstab 14. Das Betätigungsglied 26 erstreckt sich über knapp die Hälfte der Länge des Schafts 20 und ist insofern vergleichsweise lang und groß. Seine seitliche Erstreckung beträgt etwa ein Drittel seiner Längserstreckung und nimmt etwa ein Viertel oder ein Drittel der Breite des Lichthärtgeräts 10 ein.

Das Betätigungsglied 26 ist gegenüber der Aufnahmefläche 22 ebenfalls etwas abgesetzt, und überragt diese bevorzugt um etwa 0,5 mm. Es versteht sich, dass anstelle dessen aber auch ein beliebiges anderes Vorsprungmaß, beispielsweise auch bis zu 2 mm, gewählt werden kann, oder in einem modifizierten Ausführungsbeispiel das Vorsprungmaß auch auf 0 reduziert werden kann.

Bevorzugt weist die Betätigungsfläche 26 des Betätigungsglieds 26 eine etwas andere Oberflächenstruktur auf als das Gehäuse 12 im Übrigen. Beispielsweise kann das Gehäuse 12 aus einem hochglatten Kunststoff bestehen, und die Betätigungsfläche 26 kann eine gewisse Rauigkeit haben.

Das Betätigungsglied 26 trägt ferner Beschriftungen 28, die in Fig. 1 symbolisch dargestellt sind. Die Beschriftungen können entweder in der Abdeckung 30 des Betätigungsglieds hinterlegt sein, also durch Einfärbung von unten oder oben realisiert sein, oder aber eine dreidimensionale Ausprägung haben, so dass sie von dem Finger des Bedieners spürbar sind.

In dem dargestellten Ausführungsbeispiel ist ein Symbol 32 für das Einschalten des Lichthärtgeräts vorgesehen, sowie vier Symbole 34a, 34b, 34c und 34d, die jeweils mit 30, 20 , 15 und 10 beschriftet sind, und die entsprechenden Belichtungszeiten des Lichthärtgeräts symbolisieren.

Das Lichthärtgerät 10 wird ausschließlich über die Betätigung der Betätigungsfläche 26 bedient. Egal an welcher Stelle der Bediener das Betätigungsglied 26 niederdrückt, sei es im rückwärtigen Bereich, sei es im vorderen Bereich - also dem Lichtleitstab 14 benachbart, wird die erwünschte Bedienfunktion ausgelöst, und zwar eine Anwahl der Belichtungszeit und ein Einschalten des Lichthärtgeräts für die Dauer der erwünschten Belichtungszeit.

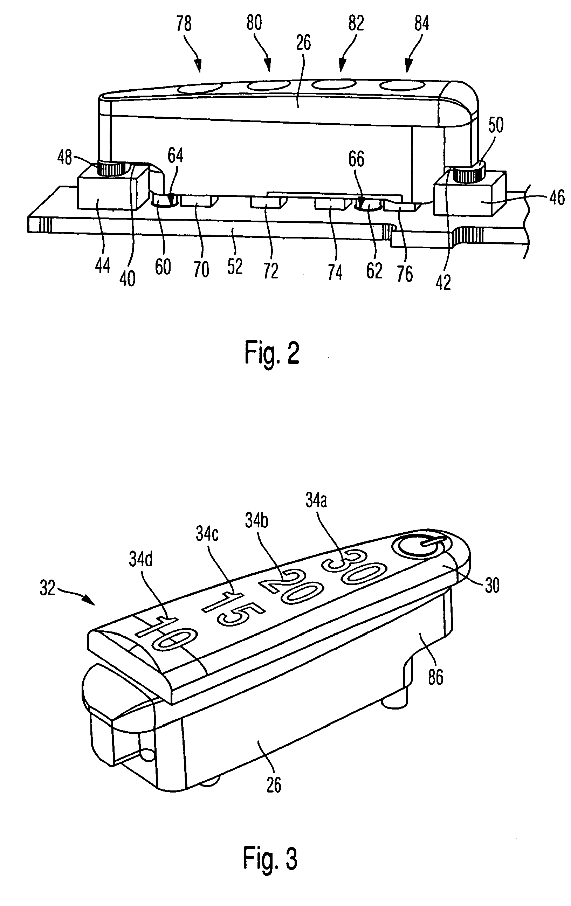

Aus Fig. 2 ist die praktische Realisierung eines Betätigungsglieds 26 und der zugehörigen weiteren Teile des erfindungsgemäßen Lichthärtgeräts ersichtlich. Das Betätigungsglied 26 erstreckt sich parallel zur Oberfläche des Gehäuses 12 an der entsprechenden Stelle des Gehäuses. Es ist über Auflager 40 und 42 nach der Art einer Brücke an Steuerelementen 44 und 46 abgestützt, und zwar an deren Schaltelementen 48 und 50. Jedes Steuerelement 44 bzw. 46 bildet zusammen mit dem zugehörigen Schaltelement 48 bzw. 50 einen an sich bekannten gekapselten Taster, der auf einer gedruckten Schaltung 52 aufgelötet oder in beliebiger anderer Weise angebracht ist.

Durch Niederdrücken des zugehörigen Schaltelements 48 bzw. 50 wird die erwünschte Schaltfunktion ausgelöst. Das Schaltelement wird jedoch über je eine Druckfeder begrenzt nach oben gedrückt, welche wiederum das Betätigungsglied 26 über das zugehörige Auflager 40 bzw. 42 ebenfalls nach oben drückt.

Erfindungsgemäß ist es besonders günstig, dass sich das Betätigungsglied 26 als vergleichsweise großvolumiger Körper - der jedoch mindestens teilweise hohl ist - erstreckt, und zwar so, dass auch der Bereich zwischen den Steuerelementen 44 und 46 nahezu vollständig von dem Betätigungsglied 26 eingenommen wird. Die großflächige Ausgestaltung ermöglicht eine präzise Führung des Betätigungsglieds 26. Hierzu sind Führungselemente 60 und 62 vorgesehen, die nach der Art von Stiften ausgebildet sind und Durchtrittsöffnungen 64 bzw. 66 in der gedruckten Schaltung 52 durchtreten. Durch diese Führungselemente 60 und 62 ist eine seitliche Führung des Betätigungsglieds 26 gewährleistet. Eine leichte Verkantung durch einseitigen Druck auf das Betätigungsglied 26 wird jedoch durch diese Führung nicht verhindert, sehr wohl jedoch eine seitliche Bewegung, also eine Bewegung quer zur Auslöserichtung der Steuerelemente 44 und 46.

Noch etwas unterhalb des Betätigungsglieds 26, also zwischen diesem und der gedruckten Schaltung 52, sind LED-Chips 70, 72, 74 und 76 angeordnet, die in an sich bekannter Weise als SMD-Bauteile auf der gedruckten Schaltung 52 aufgebracht sind. Diese ragen in Licht-Durchtrittsöffnungen 78, 80, 82 und 84 hinein, die sich durch das Betätigungsglied 26 hindurcherstrecken und den freien Lichtdurchtritt dort ermöglichen.

In an sich bekannter Weise weist die gedruckte Schaltung 52 Leiterbahnen auf, die die Anschlüsse für die Steuerelemente 44 und 46 einerseits und für die LED-Chips 70 bis 76 andererseits bereitstellen und mit der nicht dargestellten Steuervorrichtung für das Lichthärtgerät 10 verbunden sind.

Aus Fig. 3 ist ersichtlich, dass die Abdeckung 30 auf dem in Fig. 2 ersichtlichen Teil des Betätigungsglieds 26 angebracht ist. Der untere Teil 86 des Betätigungsglieds 26 besteht aus einem lichtundurchlässigen Material, während die Abdeckung 30 aus einem transparenten oder zumindest durchscheinenden Material besteht. Die Symbole 34a, 34b, 34c und 34d sind je oberhalb der Licht-Durchtrittsöffnungen 78, 80, 82 und 84 angebracht, so dass bei Lichtemission des zugehörigen LED-Chips 70, 72, 74 bzw. 76 das betreffende Symbol 34a bis 34d von unten beleuchtet wird, während die anderen Symbole unbeleuchtet verbleiben.

Durch die in dieser Ausführungsform geprägte Realisierung der Symbole 32 lässt sich eine zusätzliche haptische Signalisierung für die Betätigung des Betätigungsglieds 26 verwirklichen.

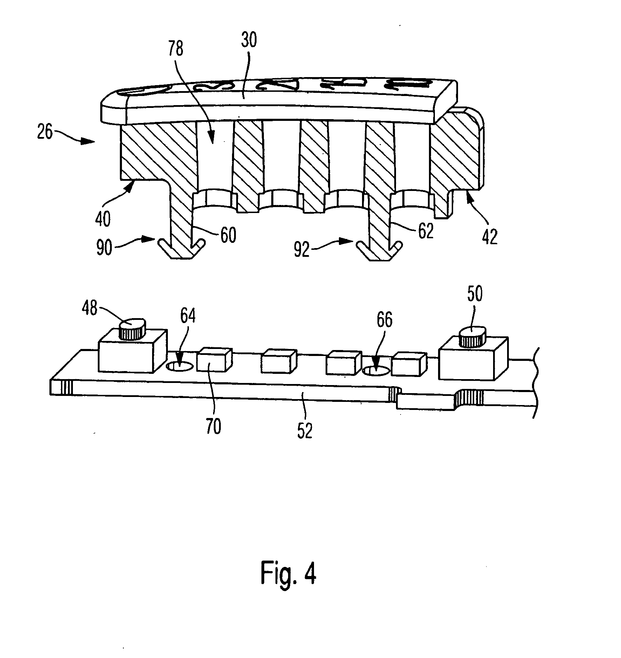

Aus Fig. 4 ist eine modifizierte Ausgestaltung des Betätigungsglieds 26 ersichtlich. Bei dieser Ausgestaltung weisen die Führungselemente 60 und 62 endseitig je einen nach oben weisenden Anschlag 90 bzw. 92 auf. Die sich pfeilförmig erstreckende Zunge der Anschläge 90 bzw. 92 lassen sich für das Einführen der Führungselemente 60 und 62 in die Durchtrittsöffnungen 64 und 66 zusammenlegen und spreizen sich nach Durchtreten der gedruckten Schaltung 52 auf, so dass ein Anschlag für den Betätigungsweg des Betätigungsglieds 26 gebildet ist, der eine weitere Bewegung nach oben verhindert.

Die Bewegung nach unten wird durch den Hubweg der Schaltelemente 48 und 50 begrenzt, die über die Auflager 40 bzw. 42 das Betätigungsglied 26 abstützen. Bevorzugt ist die Dimensionierung der Auflager 40 bzw. 42 so vorgesehen, dass die Auflager 40 bzw. 42 mit einer ganz leichten Vorspannung auf den Schaltelementen 48 und 50 aufliegen, so dass eine spielfreie Führung des Betätigungsglieds realisiert ist.

Wie aus Fig. 4 ersichtlich ist, weisen die Durchtrittsöffnungen 78 einen etwas größeren Durchmesser als die LED-Chips 70 auf und erstrecken sich über die gesamte Höhe des Betätigungsglieds 26.

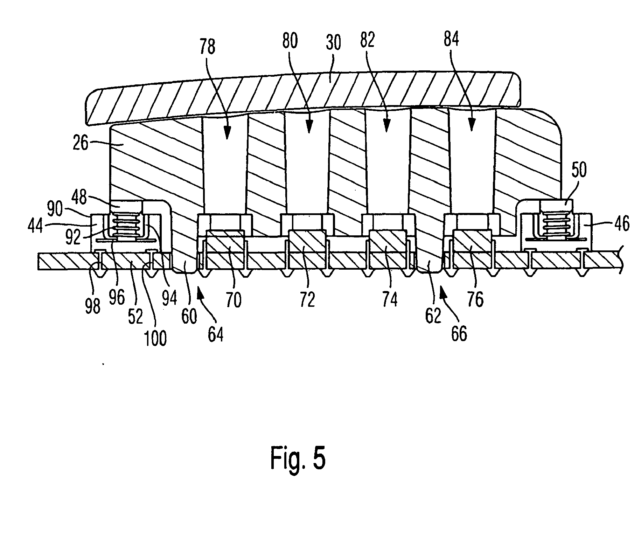

Eine vergrößerte Darstellung eines erfindungsgemäßen Betätigungsglieds 26 und weitere Teile des erfindungsgemäßen Lichthärtgeräts sind aus Fig. 5 ersichtlich. Gleiche Teile weisen hier wie auch in den weiteren Figuren auf gleiche oder entsprechende Elemente hin. Bei dieser Ausführungsform ist es vorgesehen, die Steuerelemente und in dem dargestellten Ausführungsbeispiel auch die LED-Chips 70 bis 76 mit Anschlussdrähten zu versehen, die je in entsprechende Durchtrittsausnehmungen in der gedruckten Schaltung 52 hineinragen und diese durchtreten, sowie an dem gegenüberliegenden, in der Darstellung unteren Ende mit entsprechenden Leiterbahnen verlötet sind.

Jedes Steuerelement 46, das als Taster ausgebildet ist, weist in an sich bekannter Weise ein Schaltelement 48 auf, das einen Stößel umfasst. Am Beispiel der Steuerelemente 44 und 46 wird der Aufbau erläutert. Der Stößel 48 ragt aus einem Gehäuse 90 des Steuerelements 44 nach oben heraus. Innerhalb des Gehäuses ist er von einer Druckfeder 92 umgeben, die den Stößel 48 nach oben drückt und unten an einem gehäusefesten Zylinder 94 abgestützt ist. Der Zylinder 94 wird von dem Schaltelement 48 durchtreten, das eine Kontaktplatte 96 aufweist, die sich im Wesentlichen parallel zur gedruckten Schaltung erstreckt, und zwar oberhalb von zwei Kontakten 98 und 100.

Beim Niederdrücken des Schaltelements 48 schließt nun die Kontaktplatte 96 die Kontakte 98 und 100 kurz, so dass die Steuerungsfunktion in der gewünschten Weise bereitgestellt wird.

Über entsprechende Leiterbahnen sind die Kontakte 98 und 100 des Steuerelements 44 mit denen des Steuerelements 50 parallel geschaltet.

In dem dargestellten Ausführungsbeispiel verläuft die Abdeckung 30 leicht schräg zu der gedruckten Schaltung 52. Aufgrund der relativ groß dimensionierten Ausgestaltung des Betätigungsglieds 26 lässt dies dessen Kontur ohne Weiteres realisieren, wobei es sich versteht, dass auch eine parallele Anordnung je nach Design des erfindungsgemäßen Lichthärtgeräts 10 ohne Weiteres möglich ist.

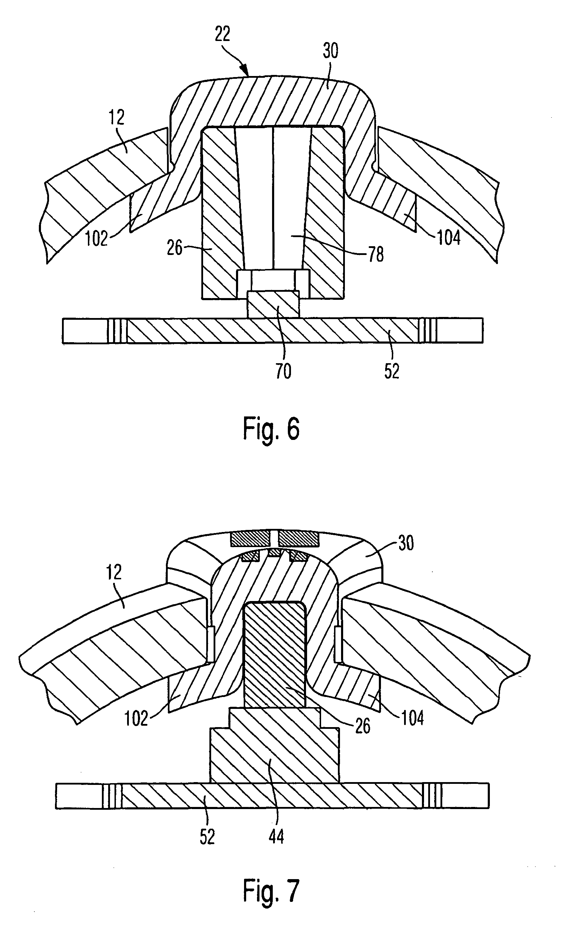

In den Figuren 6 und 7 ist eine modifizierte Ausgestaltung der Erfindung dargestellt. Diese Ausgestaltung unterscheidet sich von den weiteren Ausführungsformen durch eine andere Art der Abdeckung. Die dortige Abdeckung 30 besteht aus einem Elastomer oder einem anderen weichelastischen Kunststoff und erstreckt sich im Schnitt im wesentlichen hutförmig über das Betätigungsglied 26 im Übrigen. Die Abdeckung 30 erstreckt sich in an sich bekannter Weise durch eine Durchtrittsausnehmung in dem Gehäuse 12 hindurch. Sie ragt gegenüber der Gehäuseoberfläche deutlich vor, beispielsweise um 1 oder 2 mm. Seitliche Flansche 102 und 104 erstrecken sich innen in dem Gehäuse an der Wand des Gehäuses entlang, im Grunde in dessen Verlängerung. Hierdurch lässt sich auch eine besonders gute Abdichtung realisieren, gerade dann, wenn an der Anlagefläche zwischen dem Flansch 102 bzw. 104 und dem Gehäuse 12 eine Vorspannung besteht, die auch dann bestehen bleibt, wenn durch Druck auf die Aufnahmefläche 22 das Stellglied 26 niedergedrückt wird.

Die Durchtrittsausnehmung 78 wird mit Licht aus der Lichtquelle 70 gespeist, die wie bei den vorstehenden Ausführungsformen auf der gedruckten Schaltung 52 aufgebracht ist. Die Abdeckung 30 ist transparent oder durchscheinend; sie kann beispielsweise aus einem silikonartigen Material bestehen. Bei Emission von Licht aus dem LED-Chip 70 wird der sich über der Durchtrittsausnehmung 78 erstreckende Bereich der Abdeckung 30 von hinten/innen erleuchtet. Das an der Aufnahmefläche 22 dort angebrachte Symbol wird dann hinterleuchtet und signalisiert die diesbezügliche Information.

Aus Fig. 7, die einen Schnitt durch das erfindungsgemäße Lichthärtgerät im Bereicht des Steuerelements 44 zeigt, ist ersichtlich, dass an dieser Stelle das Betätigungsglied 26 und damit die Abdeckung 30 wesentlich schmaler ist. Dennoch ist die Form der Abdeckung 30 ebenfalls im Schnitt im Wesentlichen hutförmig, und die Flansche 102 und 104 erstrecken sich parallel zum Gehäuse 12 innen an diesem entlang.

Über das Betätigungsglied 26 wird bei Druck auf die Abdeckung 30 das Steuerelement 44 und der dort eingebaute Schalter oder Taster betätigt. Über nicht dargestellte Leiterbahnen auf der gedruckten Schaltung 52 wird die diesbezügliche Steuerungsinformation an die nicht dargestellte Steuervorrichtung weiter gegeben.

## Patentansprüche

1. Lichthärtgerät, insbesondere handgeführtes Lichthärtgerät, mit einem Gehäuse (12), mindestens einem Steuerelement (44, 46) für die Betriebssteuerung des Lichthärtgerätes (10) und einem gegenüber dem Gehäuse (12) beweglich gelagerten Betätigungsglied (26) für die Betätigung des Steuerelementes (44, 46), **dadurch gekennzeichnet, dass** das Lichthärtgerät (10) wenigstens zwei voneinander beabstandete Steuerelemente (44, 46) aufweist, die elektrisch parallel zueinander geschaltet sind, und mindestens eines der Steuerelemente (44, 46) durch Betätigung des Betätigungsglieds (26) betätigbar ist, und wobei das Betätigungsglied (26) Licht-Durchtrittsöffnungen (78, 80, 82 und 84) aufweist, in die sich jeweils ein lichtemittierendes Element von lichtemittierenden Elementen erstreckt, und wobei das Betätigungsglied (26), um eine optische Entkopplung vorzunehmen, im Bereich der Licht-Durchtrittsöffnungen (78, 80, 82 und 84) intransparentes oder opakes Material aufweist.

2. Lichthärtgerät nach Anspruch 1, **dadurch gekennzeichnet, dass** die Steuerelemente (44, 46) mit dem Betätigungsglied (26) betätigbare, federbelastete Schaltelemente (48, 50) mit je einer Wippe oder einem Stößel (48), aufweisen.

3. Lichthärtgerät nach Anspruch 1 oder 2, **dadurch gekennzeichnet, dass** sich zumindest ein Teil des Betätigungsgliedes (26) zwischen den Steuerelementen (44, 46) erstreckt und zumindest ein Teil des Betätigungsgliedes (26) die Aussenkontur der Steuerelemente (44, 46) überragt.

4. Lichthärtgerät nach einem der vorhergehenden Ansprüche, **dadurch gekennzeichnet, dass** das Betätigungsglied (26) sich nach der Art eines Balkens oder einer Brücke über die Steuerelemente (44, 46) erstreckt und an diesen abgestützt ist.

5. Lichthärtgerät nach einem der vorhergehenden Ansprüche, **dadurch gekennzeichnet, dass** das Betätigungsglied (26) in Betätigungsrichtung der Steuerelemente (44, 46) gegenüber einer im Gehäuse (12) angeordneten gedruckten Schaltung (52) beweglich gelagert ist, wobei der Bewegungsweg des Betätigungsglieds (26) von gehäusefesten Anschlägen (90, 92) oder von der gedruckten Schaltung (52) oder von Anschlägen der Steuerelemente begrenzt ist.

6. Lichthärtgerät nach einem der vorhergehenden Ansprüche, **dadurch gekennzeichnet, dass** der beweglichen Lagerung des Betätigungsgliedes (26) wenigstens Führungselemente (60, 62) dienen, die eine Bewegung des Betätigungsglieds (26) in eine Richtung quer zur Betätigungsrichtung der Steuerelemente (44, 46) verhindern, eine Kippbewegung des Betätigungsglieds (26) jedoch ermöglichen, wobei zwei vom Betätigungsglied (26) abragende Stifte in entsprechende Durchtrittsöffnungen (64 und 66) durch die gedruckte Schaltung (52) hindurch ragen.

7. Lichthärtgerät nach nach Anspruch 5 oder Anspruch 6, **dadurch gekennzeichnet, dass** auf der gedruckten Schaltung (52) die lichtemittierenden Elemente und die Steuerelemente (44, 46) angebracht sind und auf dieser aufliegen, wobei das Betätigungsglied (26) Licht-Durchtrittsöffnungen (78, 80, 82 und 84) aufweist deren Mittellängsachsen mit Lichtemissionsachsen der lichtemittierenden Elemente fluchten.

8. Lichthärtgerät nach einem der vorhergehenden Ansprüche, **dadurch gekennzeichnet, dass** das Betätigungsglied (26) auch bei dem Auslösen lediglich eines Steuerelementes (44, 46) durch Druck auf eine Seite des Betätigungsglieds (26) einen seitlichen Abstand gegenüber den Licht emittierenden Elementen belässt.

9. Lichthärtgerät nach Anspruch 7 oder Anspruch 8, **dadurch gekennzeichnet, dass** das Betätigungsglied (26) wenigstens teilweise aus einem intransparenten bzw. opaken Material besteht und auf der den lichtemittierenden Elementen gegenüberliegenden Seite der Licht-Durchtrittsöffnungen (78, 80, 82 und 84) eine Abdeckung (30) aufweist, auf der Beschriftungen (28) oder Symbole (34a bis 34d) angebracht sind und bevorzugt Belichtungszeiten in Form von Zahlen (10-15-20-30) erkennbar sind.

10. Lichthärtgerät nach Anspruch 9, **dadurch gekennzeichnet, dass** die Abdeckung (30) der Licht-Durchtrittsöffnungen (78, 80, 82 und 84) an Stellen transparent ist, an denen die Beschriftungen (28) oder Symbole (34a bis 34d) angebracht sind, und im Übrigen intransparent bzw. opak ist.

11. Lichthärtgerät nach Anspruch 9 oder Ansapruch 10, **dadurch gekennzeichnet, dass** sich die Abdeckung (30) in vertikaler Richtung an der Innenseite des Gehäuses (12) abstützt und die vertikale Beweglichkeit des Betätigungsglieds (26) begrenzt.

12. Lichthärtgerät nach einem der vorhergehenden Ansprüche, **dadurch gekennzeichnet, dass** beim Betätigen des Betätigungsgliedes (26) die lichtemittierenden Elemente nacheinander aufleuchten und dass das Aufleuchten eines lichtemittierenden Elementes einen bestimmten Betriebszustand oder eine Belichtungszeit symbolisiert.

13. Lichthärtgerät nach einem der Ansprüche 2 bis 12, **dadurch gekennzeichnet, dass** bei Betätigung eines der Schaltelemente (48, 50) als optische Bestätigung ein Betriebszustand mindestens eines lichtemittierenden Elements geändert wird, wobei ein lichtemittierendes Element ausgeschaltet und ein benachbartes eingeschaltet wird.

14. Lichthärtgerät nach einem der Ansprüche 2 bis 13, **dadurch gekennzeichnet, dass** das Steuerelement (44, 46) von einem elektrischen Schalter oder einem elektrischen Taster gebildet ist und die lichtemittierenden Elemente von Leuchtdioden (LED) wie LED-Chips (70, 72, 74 und 76), gebildet sind.

15. Lichthärtgerät nach einem der Ansprüche 9 bis 14, **dadurch gekennzeichnet, dass** die Abdeckung (30) aus einem elastischen Material, insbesondere Silikon, besteht.

## Claims

1. A light curing device, in particular a hand-held light curing device, comprising a housing (12), at least one control element (44, 46) for controlling the operation of the light curling device (10) and an actuating member (26) which is mounted movably relative to the housing (12) for the actuation of the control element (44, 46), **characterized in that** the light curing device (10) comprises at least two control elements (44, 46) spaced apart from each other which are electrically connected in parallel, and **in that** at least one of the control elements (44, 46) can be actuated by actuation of the actuating member (26), and wherein the actuating member (26) comprises light through openings (78, 80, 82 and 84) into which one respective light-emitting element of light-emitting elements extends, and wherein the actuating member (26), in order to carry out optical decoupling, comprises intransparent or opaque material in the area of the light through openings (78, 80, 82 and 84).

2. The light curing device according to claim 1, **characterized in that** the control elements (44,46) comprise spring-loaded switching elements (48, 50) which can be actuated via the actuating member (26) and which comprise a rocker or a plunger (48) each.

3. The light curing device according to claims 1 or 2, **characterized in that** at least one part of the actuating member (26) extends between the control elements (44, 46) and that at least one part of the actuating member (26) protrudes beyond the outer contour of the control elements (44, 46).

4. The light curing device according to any of the foregoing claims, **characterized in that** the actuating member (26) extends over the control elements (44, 46) in a beam- or bridge-like manner and that it is supported by them.

5. The light curing device according to any of the foregoing claims, **characterized in that** the actuating member (26) is mounted movably in the actuating direction of the control elements (44, 46) relative to a printed circuit (52) which is disposed in the housing (12) wherein the path of movement of the actuating member (26) is limited by stops (90, 92) which are fixed to the housing or by the printed circuit (52) or by stops of the control elements.

6. The light curing device according to any of the foregoing claims, **characterized in that** at least guide elements (60, 62) serve to movably mount the actuating member (26) which prevent a movement of the actuating member (26) in a direction transverse to the actuating direction of the control elements (44, 46), which, however, make possible a tilting movement of the actuating member (26), wherein two pins which project from the actuating member (26) extend into corresponding through openings (64 and 66) through the printed circuit (52).

7. The light curing device according to claim 5 or claim 6, **characterized in that** the lightemitting elements and the control elements (44, 46) are mounted to the printed circuit (52) and supported by it, wherein the actuating member (26) comprises light through openings (78, 80, 82 and 84) whose center longitudinal axes are in alighment with the light emission axes of the light-emitting elements.

8. The light curing device according to any of the foregoing claims, **characterized in that** the actuating member (26) keeps a lateral distance relative to the light-emitting elements even when actuating only one control element (44, 46) by pressing down one side of the actuating member (26).

9. The light curing device according to claim 7 or claim 8, **characterized in that** the actuating member (26) consists at least partially of an intransparent or opaque material and on the side of the light through openings (78, 80, 82 and 84) which is opposite to the light-emitting elements comprises a cover (30) to which markings (28) or symbols (34a to 34d) are affixed and on which preferably exposure times in the form of numbers (10 - 15 - 20 - 30) are identifiable.

10. The light curing device according to claim 9, **characterized in that** the cover (30) of the light through openings (78, 80, 82 and 84) is transparent at positions where the markings (28) or symbols (34a to 34d) are affixed, and apart from that is intransparent or opaque.

11. The light curing device according to claim 9 or claim 10, **characterized in that** the cover (30) is supported in a vertical direction at the inner side of the housing (12) and that it limits the vertical movability of the actuating member (26).

12. The light curing device according to any of the foregoing claims, **characterized in that** upon actuation of the actuating member (26) the light-emitting elements light up successively and that in particular the lighting up of a light-emitting element symbolizes a certain operating state or an exposure time.

13. The light curing device according to any of the claims 2 to 12, **characterized in that** upon actuation of the switch elements (48, 50) an operating state of at least one light-emitting element is changed as an optical confirmation, wherein one light-emitting element is turned off and an adjacent light-emitting element is turned on.

14. The light curing device according to any of the claims 2 to 13, **characterized in that** the control element (44, 46) is formed by an electric switch or an electric button and that the light-emitting elements are formed by light diodes (LED), such as LED chips (70, 72, 74 and 76).

15. The light curing device according to any of the claims 9 to 14, **characterized in that** the cover (30) consists of an elastic material, in particular silicone.

## Revendications

1. Appareil de photopolymérisation, en particulier appareil de photopolymérisation manuel, avec un boîtier (12), au moins un élément de commande (44, 46) pour la commande du fonctionnement dudit appareil de photopolymérisation (10), et un élément d'actionnement (26) pour l'activation de'l'élément de commande (44, 46), monté de manière déplaçable par rapport au boîtier (12), **caractérisé en ce que** ledit appareil de photopolymérisation (10) comporte au moins deux éléments de commande (44, 46) espacés l'un de l'autre, montés électriquement en parallèle entre eux, et **en ce qu'**au moins un des éléments de commande (44, 46). peut être activé par actionnement de l'élément d'actionnement (26), l'élément d'actionnement (26) présentant des ouvertures de passage de lumière (78, 80, 82 et 84) dans chacune desquelles s'étend un élément émetteur lumineux parmi des éléments émetteurs lumineux, et l'élément d'actionnement (26) présente un matériau non transparent ou opaque afin de procéder à un découplage optique au niveau des ouvertures de passage de lumière (78, 80, 82 et 84).

2. Appareil de photopolymérisation selon la revendication 1, **caractérisé en ce que** les éléments de commande (44, 46), comportent des éléments de commutation (48, 50) contraints par ressort, activables par l'élément d'actionnement (26) et pourvus chacun d'une bascule ou d'un poussoir (48).

3. Appareil de photopolymérisation selon la revendication 1 ou 2, **caractérisé en ce qu'**au moins une partie de l'élément d'actionnement (26) s'étend entre les éléments de commande (44, 46), et en particulier **en ce qu'**au moins une partie de l'élément d'actionnement (26) dépasse du contour extérieur des éléments de commande (44, 46) .

4. Appareil de photopolymérisation selon l'une des revendications précédentes, **caractérisé en ce que** l'élément d'actionnement (26) s'étend à la manière d'une barre ou d'un pont au-dessus des éléments de commande (44, 46) et s'appuie sur eux.

5. Appareil de photopolymérisation selon l'une des revendications précédentes, **caractérisé en ce que** l'élément d'actionnement (26) est monté de manière mobile par rapport à un circuit imprimé (52) disposé dans le boîtier (12) dans la direction d'activation des éléments de commande (44, 46), la course de déplacement de l'élément d'actionnement (26) étant limitée par des butées (90, 92) fixes sur le boîtier ou par le circuit imprimé (52) ou par des butées des éléments de commande.

6. Appareil de photopolymérisation selon l'une des revendications précédentes, **caractérisé en ce qu'**au moins des éléments de guidage (60, 62) servent au montage mobile de l'élément d'actionnement (26), lesquels empêchent un déplacement de l'élément d'actionnement (26) dans une direction transversale à la direction d'actionnement des éléments de commande (44, 46), en permettant toutefois un pivotement de l'élément d'actionnement (26), deux goupilles saillantes de l'élément d'actionnement (26) traversant des ouvertures de passage (64 et 66) correspondantes du circuit imprimé (52).

7. Appareil de photopolymérisation selon la revendication 5 ou la revendication 6, **caractérisé en ce que** les éléments émetteurs lumineux et les éléments de commande (44, 46) sont appliqués sur le circuit imprimé (52) et reposent sur celui-ci, l'élément d'actionnement (26) comportant des ouvertures de passage de lumière (78, 80, 82 et 84) dont les axes longitudinaux médians sont alignés avec les axes d'émission lumineuse des éléments émetteurs lumineux.

8. Appareil de photopolymérisation selon l'une des revendications précédentes, **caractérisé en ce que** l'élément d'actionnement (26) maintient un espacement latéral par rapport aux éléments émetteurs lumineux, y compris en cas de déclenchement d'un seul élément de commande (44, 46) par pression sur un côté de l'élément d'actionnement (26).

9. Appareil de photopolymérisation selon la revendication 7 ou la revendication 8, **caractérisé en ce que** l'élément d'actionnement (26) est constitué au moins partiellement d'un matériau non transparent ou opaque et présente un couvercle (30) sur le côté des ouvertures de passage de lumière (78, 80, 82 et 84) opposé aux éléments émetteurs lumineux, où sont appliqués des inscriptions (28) ou des symboles (34a à 34d) et où sont préférentiellement identifiables des temps d'exposition sous la forme de chiffres (10 - 15 - 20 - 30).

10. Appareil de photopolymérisation selon la revendication 9, **caractérisé en ce que** le couvercle (30) des ouvertures de passage de lumière (78, 80, 82 et 84) est transparent à des emplacements où sont appliqués les inscriptions (28) ou les symboles (34a à 34d), et est non transparent ou opaque ailleurs.

11. Appareil de photopolymérisation selon la revendication 9 ou la revendication 10, **caractérisé en ce que** le couvercle (30) s'appuie contre la face intérieure du boîtier (12) dans la direction verticale et limite la mobilité verticale de l'élément d'actionnement (26).

12. Appareil de photopolymérisation selon l'une des revendications précédentes, **caractérisé en ce qu'**en cas d'activation de l'élément d'actionnement (26), les éléments émetteurs lumineux s'allument successivement, et **en ce que** l'allumage d'un élément émetteur lumineux symbolise un état de fonctionnement défini ou un temps d'exposition.

13. Appareil de photopolymérisation selon l'une des revendications 2 à 12, **caractérisé en ce qu'**en cas d'activation d'un des éléments de commutation (48, 50) un état de fonctionnement d'au moins un élément émetteur lumineux est modifié en tant que confirmation optique, un élément émetteur lumineux étant désactivé et un émetteur contigu étant activé.

14. Appareil de photopolymérisation selon l'une des revendications 2 à 13, **caractérisé en ce que** l'élément de commande (44, 46) est constitué par un commutateur électrique ou un bouton-poussoir électrique et les éléments émetteurs lumineux par des diodes électroluminescentes (LED) telles que des puces LED (70, 72, 74 et 76).

15. Appareil de photopolymérisation selon l'une des revendications 9 à 14, **caractérisé en ce que** le couvercle (30) est constitué d'un matériau élastique, en particulier de silicone.
